# EUROPEAN PATENT APPLICATION

(11) **EP 0 651 474 A2**
(43) Date of publication of application: **03.05.1995**
(21) Application number: 94117269.4
(22) Date of filing: 02.11.1994
(51) Int. Cl.: H01R 43/28, H01B 13/00

(54) **Electrical harness manufacture**

(30) Priority: 02.11.1993 GB 9322538
(71) Applicant: THE WHITAKER CORPORATION, Wilmington, Delaware 19808 (US)
(72) Inventor: Schmiedchen, Gunter, D-64807 Dieburg (DE)
(74) Representative: Klunker . Schmitt-Nilson . Hirsch

(57) **Abstract**

A complete electrical harness, for example for an automotive vehicle, is made up of separate harness modules (8,20,30,44). Each of these modules comprises a main electrical connector module, (10,22,32,46), and a plurality of satellite connectors (14,24,34,48) each having at least one contact position. Predetermined contact positions of each main connector module (10, 22, 32, 46) are connected by leads, which may be of different gauges, to predetermined contact positions of the satellite connectors. Connectors of each harness module (10, 22, 32, 46) have terminals with insulation displacement portions (110) for connection to the leads, and mating portions (108). The mating portions (108) of the main connector modules (10,22,30,46) are for connection to power or signal current sources, the mating portions (108) of the satellite connectors (14,24,34,46) are for mating with mating terminals of predetermined appliances, for example appliances of automotive vehicle. The main connector modules may be received in a common housing to provide a single main connector one (44) of the main connector modules may be connected to another (32) of the main connector modules by way of a lead having plugs or sockets (54,55). The harness modules (8,20,30,44) can be made by means of automated machinery, according to a modular harness making program derived from a rationalized diagram of a conventional electrical harness comprising a single main connector having rows of electrical terminals connected to respective electrical terminals of a multiplicity of satellite electrical terminals.

## Description

This invention relates to method of making an electrical harness, in particular a harness for an automotive vehicle, to an electrical harness and to a machine for making harness modules for that harness.

A typical known electrical harness, for example, an engine harness for an automotive vehicle, comprises a main electrical connector having at least three rows of electrical terminals, for example four rows, each terminal having a mating portion and a lead connecting portion, a multiplicity of satellite electrical connectors each having at least one electrical terminal having a mating portion and a lead connecting portion, and leads of predetermined lengths each connected to the lead connecting portion of a respective terminal of a satellite connector and of a respective terminal of the main connector.

In use of the harness, the mating portions of the terminals of the satellite connectors are mated with corresponding terminals of appliances of the vehicle and the main connector is mated with a further connector which is in turn connected to power and signal current sources for the appliances. In such a known harness, the lead connecting portions of the terminals of the main and satellite connectors are crimped to the leads and are then loaded into the respective connector housings, the leads having been previously cut to different lengths to allow for the locations of the appliances in the vehicle. The usual procedure for making such a harness, is to lay out the satellite connectors and the leads on a harness making board, crimp the terminals to their respective leads and load them into the respective connector housings. Ground connections, for example to the body of the vehicle, are made by soldering pairs of leads each to a ring tongue terminal for connection to ground. The procedure described above is accordingly unduly time consuming.

According to another aspect of the present invention a method of making a modular electrical harness comprises the steps of; producing a rationalized circuit diagram of a conventional electrical harness comprising a single main electrical connector having rows of electrical terminals connected to respective electrical terminals of a multiplicity of satellite electrical connectors; deriving from said diagram a modular harness making program; providing according to the program a plurality of main electrical connector modules, each having a mating portion and a lead receiving portion having a lead receiving slot and a multiplicity of satellite electrical connectors each having at least one electrical terminal having a mating portion and a lead receiving portion having a lead receiving slot; allocating, according to said program, to each main connector module a plurality of satellite connectors pertaining to said main connector module; producing, according to the said program, a plurality of sets of leads, the leads of each set being of a predetermined number and being of predetermined lengths and each set of leads pertaining to a respective one of said main connectors and to the satellite connectors allocated thereto; producing a plurality of discrete harness modules by inserting, according to the said program, one end portion of each lead of each set into the lead receiving slot of a respective terminal of the main connector module to which the set of leads pertains and inserting the other end portion of each lead into the lead receiving slot of a terminal of a respective satellite connector to which said set of leads pertains, thereby to connect each main connector module with each of the satellite connectors which have been allocated thereto; and assembling the harness modules so produced to provide said modular harness.

The main connector modules of the harness modules may be assembled to a common housing to provide a single main connector for the harness, or the several main connector modules may be, when the harness is in use, disposed in different positions which are convenient to the appliances to which the satellite connectors are to be connected. An advantage of the method according to the invention is that the harness modules can be rapidly and automatically produced by means of harness making machinery for providing leads of the required length and for terminating them to respective terminals of the main connectors and the satellite connectors as described below. The satellite connectors in particular, may have a standard cross-sectional shape for convenience in feeding them to an insertion station of a harness module making machine. The several harness modules maybe made by means of different harness module making machines or a single harness module making machine maybe set up to produce a first run of harness modules and reset up to produce a second run of harness modules and so on.

According to another aspect of the present invention, a modular electrical harness produced by said method comprises a plurality of harness modules each harness module comprising an elongate electrical connector module and a plurality of satellite connectors, each main connector having no more than two rows of electrical terminals, each satellite connector having at least one electrical terminal, the terminal of each satellite connector receiving one end portion of an electrical lead, the other end portion of said lead being received in a respective terminal of the main connector module.

Although the main connector modules and the satellite connectors are preferably of substantially the same cross-sectional shape and cross-sectional dimensions for ease in producing a harness module, since some of the satellite connectors maybe required to mate with circular connectors, the satellite connectors may have circular cross-sectional sockets and the mating portions of the terminals these connectors being appropriately designed.

The harness modules may comprise satellite branch connectors for use in transmitting signals from other satellite connectors to various locations or for use in making ground connections.

A machine according to US-A-4,428,114(TEAGNO) the disclosure of which is incorporated herein by reference, and which has a lead crossing facility may be used to produce modular harnesses according to the invention.

Another machine, for use in making harness modules for a harness according to the invention, may comprise a lead wire supply means having a plurality of a discrete sources of insulated lead wires of a plurality of different gauges; a lead set producing apparatus for feeding from said sources a set of lead wires of a predetermined number to a plurality of different lengths and for severing each lead wire from its source to provide a set of leads having a plurality of a different length; a main connector module feed mechanism for feeding a single main connector module at a time to a main connector module lead insertion station for inserting one end portion of each lead into the lead receiving slot of a respective terminal of said single main connector module; a satellite connector feed mechanism feeding a row of satellite connectors at a time to a satellite connector lead insertion station for inserting the other end portion of each lead into the lead receiving slot of a terminal of a respective satellite connector; and a lead transfer mechanism for transporting each set of leads from the lead set producing apparatus, to present said lead end portions to said lead insertion stations for insertion into said respective lead receiving slots to produce a harness module. Crossed lead connections would, however, need to be made subsequently at a lead insertion site.

It has been estimated that the total time that would be taken to produce a modular harness according to the invention using a machine or machines according to the teaching of the invention could amount to some 5½ times less than the time it would take to produce a conventional harness in the conventional manner described above. The machine or machines may, for example, be provided with means for controlling the pitch of sets of leads produced by the machine and may be provided with a lead bundling station for binding together the leads of each of the modular harnesses produced and may further be provided with means for testing the continuity of the electrical connections between the connectors of the harness modules produced by the machine and lead crossing facilities.

Conveniently, all the connectors of a harness module may be such as to receive identical terminals or terminals of a particular series or family, thereby enabling the tooling of the machine for making the harness module to be simplified.

Some contact positions of some of the connectors of a harness module may receive terminals crimped to leads, for example where contact positions of satellite connectors are to be bridged or where the leads are required to carry heavy current. These crimped terminals would be inserted into their contact positions after the automated production of the harness module.

Some or all of the main connector modules and/or the satellite connectors may have two superposed rows of terminals. An example of two row insulation displacement connectors is the AMPMODU-MT (RTM) family of connectors supplied by AMP Deutschland G.m.b.H. of Amperestrasse 7-11, D-6070, Langen, Germany.

Embodiments of the present invention will now be described by way of example with reference to the accompanying drawings in which:
Figure 1 is a plan view of a conventional engine electrical harness for an automotive vehicle, on a harness lay out board, leads of the harness being encased in trunking;
Figure 2 is a rationalised circuit diagram showing the leads and their connections to electrical connectors of the harness;
Figures 3 and 4 are diagrams of first and second harness modules, respectively, for use in producing a modular harness which is equivalent to the conventional harness:
Figure 5 is a diagram of the third and fourth harness modules for use in producing the modular harness;
Figure 6 is a partially exploded isometric view of an exemplary electrical connector of the kind used in the harness modules of Figures 3 to 5;
Figure 7 is a diagrammatic plan view of one machine for making harness modules; and
Figure 8 is an enlarged, fragmentary front view partly in section illustrating details of the machine shown in Figure 7; and
Figure 9 is an isometric view of another and preferred machine for making harness modules.
Figure 10 is an isometric view of an insulation displacement electrical connector having two rows of contact positions.

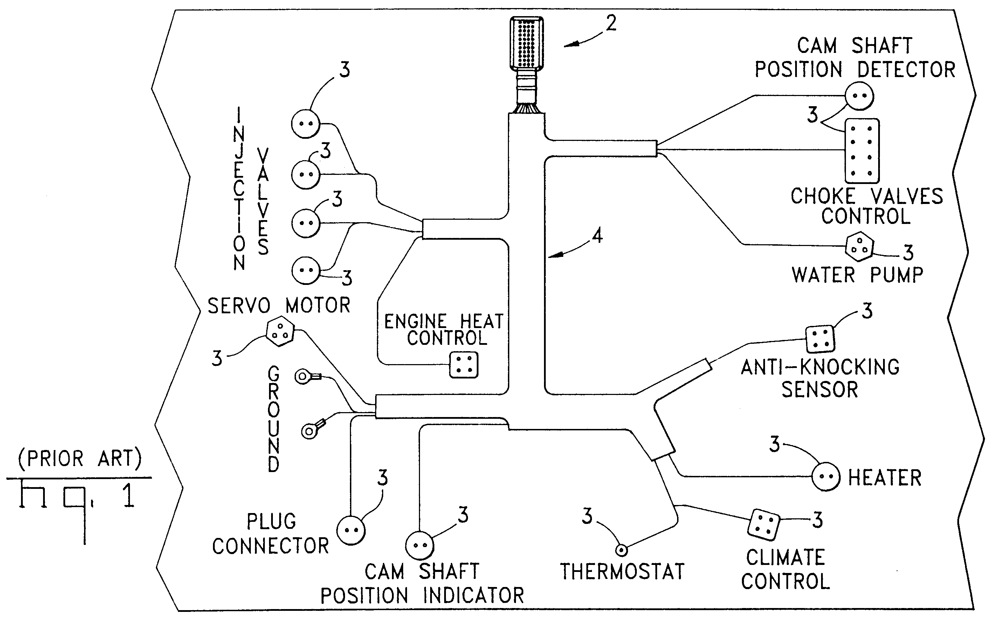

As shown in Figure 1 a conventional engine electrical harness for an automotive vehicle comprises a main electrical connector 2 having four rows of eleven contact positions (shown only schematically) some only, of which are used. The connector 2 is mateable with a further connector (not shown) to connect power from the battery of the vehicle, ground potential, or signal current from an engine control unit (not shown), to respective appliances of the vehicle (indicated by legends in Figure 1) by way of satellite electrical connectors 3 (shown only schematically) and insulated electrical leads and bundles thereof, partially encased in trunking 4. The satellite connectors 3 have between 1 and 8 contact positions and are of various configurations. Each of the contact positions of the connectors 2 and 3, contains an electrical terminal (not shown) having a lead connecting portion which will usually be a crimping barrel which has been crimped to a respective one of the leads and a mating portion. The mating portions of the terminals of the connector 2 mate with corresponding mating portions of terminals of said further connector and the mating portions of the satellite connectors 3 mate with respective terminals of said respective appliances which are indicated by legends in Figure 1. The insulated leads are of various different gauges and have various types of insulation in accordance with specific voltage and current ratings and some of the leads are shielded. In some cases, the terminals may be soldered to their respective leads or connected thereto by means of screw connections. Before assembling the harness, the leads must be cut to length in accordance with the required positions of the satellite connectors in the harness, given that the appliances to be supplied will be distributed at fixed positions in the vehicle, and the lead ends to be connected to the terminals must be stripped of insulation. In order to assemble the harness, the satellite connectors 3 and the main connector 2 are laid out on a harness making board 6 in the relative positions that they are to occupy when the harness is assembled to the vehicle. The leads are also laid out on the board 6, the terminals are applied to the stripped lead ends and are loaded into the respective contact positions of the connectors 2 and 3. Leads which are to run together, are bound by cable ties and the trunking is applied to the leads.

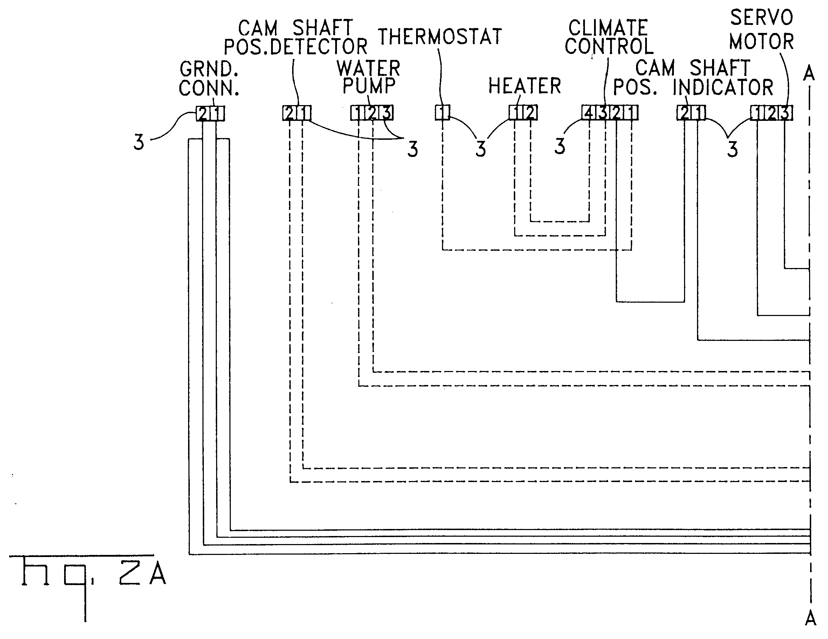

The first step in the production of a modular harness according to an embodiment of the present invention to be described herein, is to produce the rationalised circuit diagram shown in Figure 2, of the conventional harness shown in Figure 1. Figure 2 shows the leads and their connections to respective contact positions with the main connector 2 and the satellite connectors 3 each of which bears a legend corresponding to that of Figure 1, indicting the particular appliance of the vehicle which to which it is intended to be connected. The leads shown in full lines are of the largest gauges namely 1.0 mm² and 1.5 mm², the leads shown in broken lines being of smaller gauges, namely 0.5 mm² and 0.75 mm², and shielded leads.

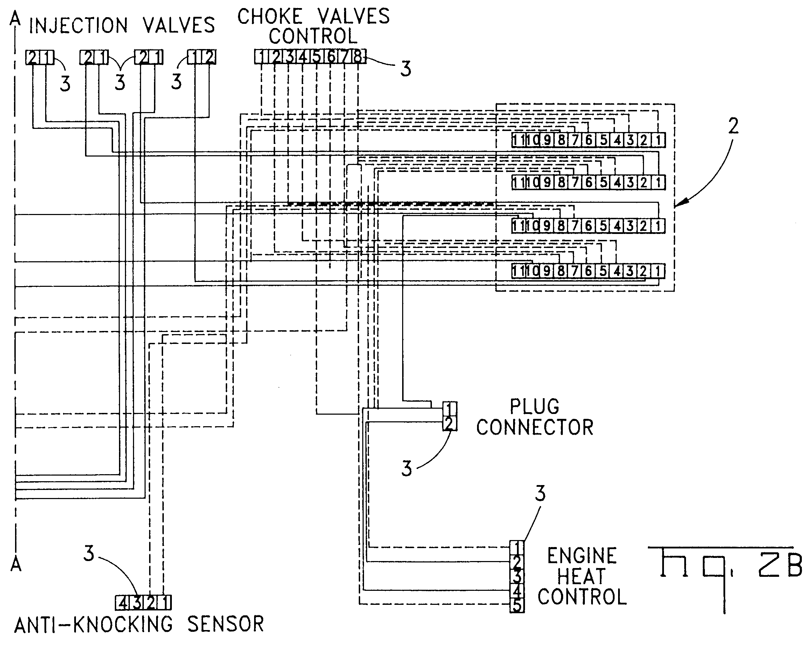

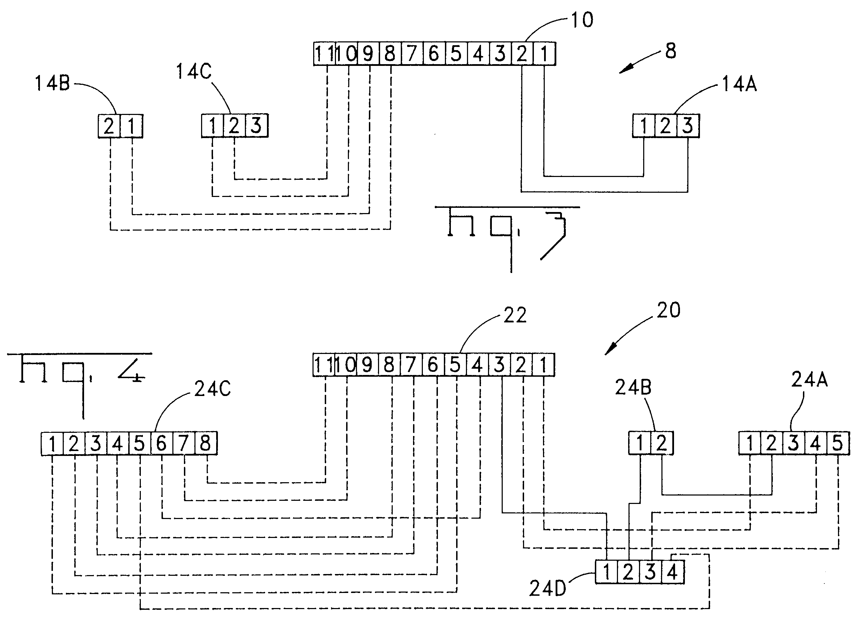

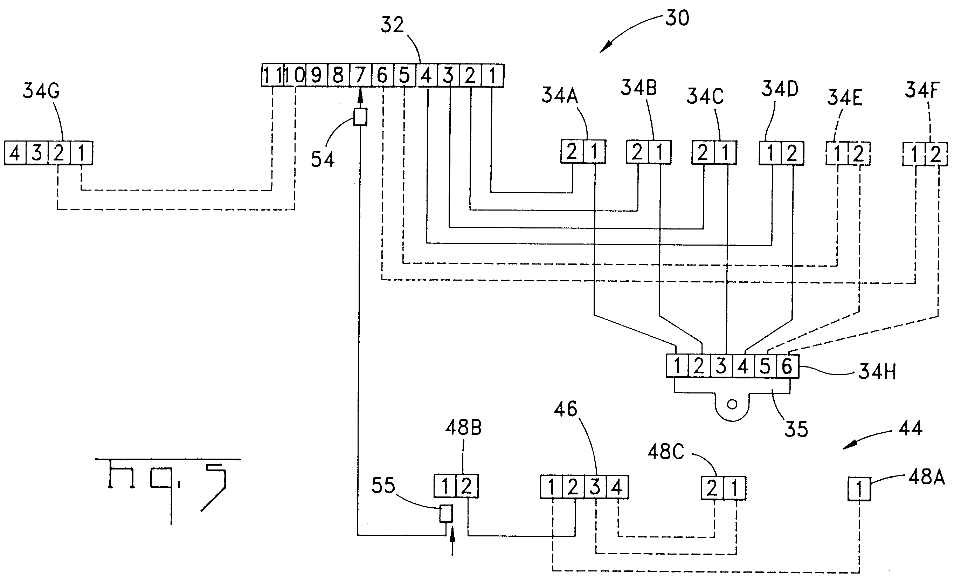

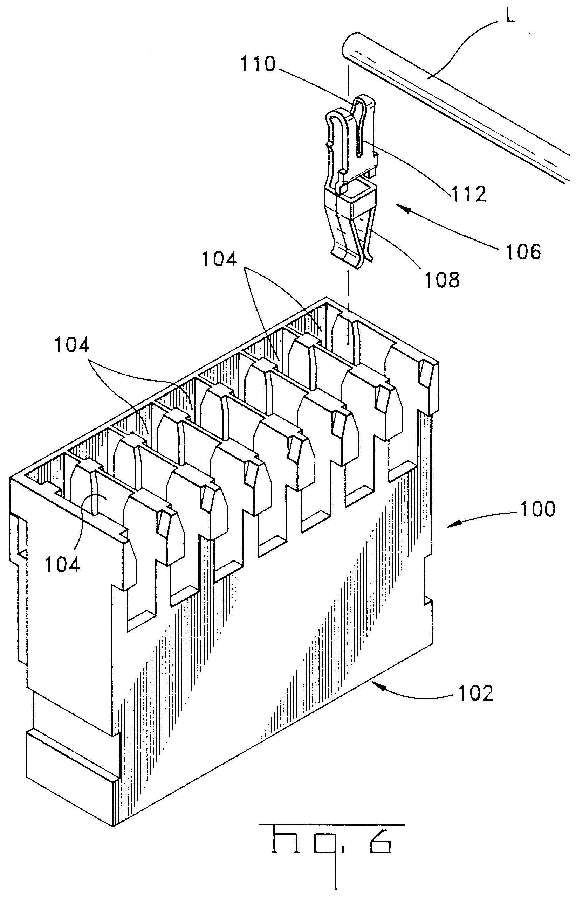

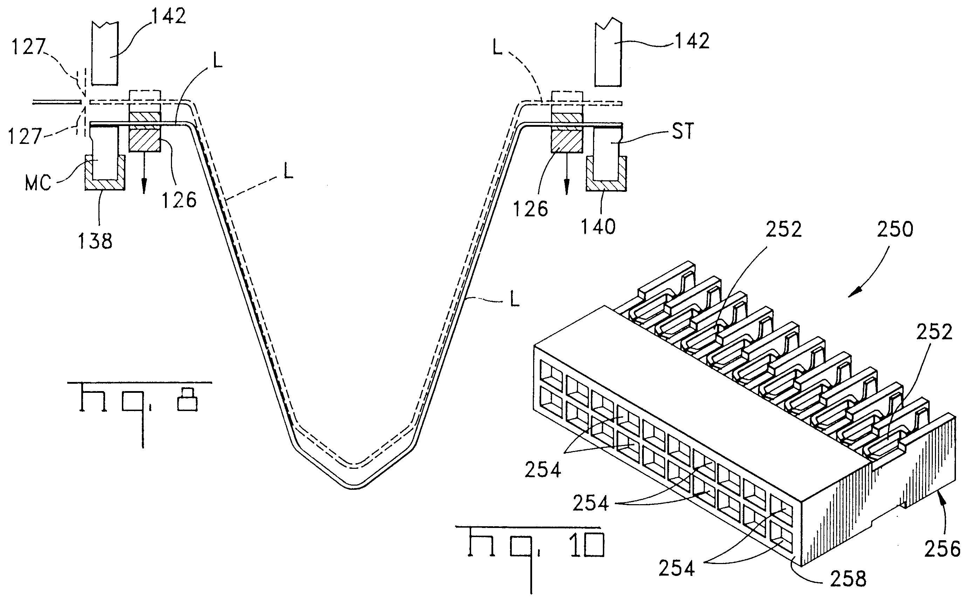

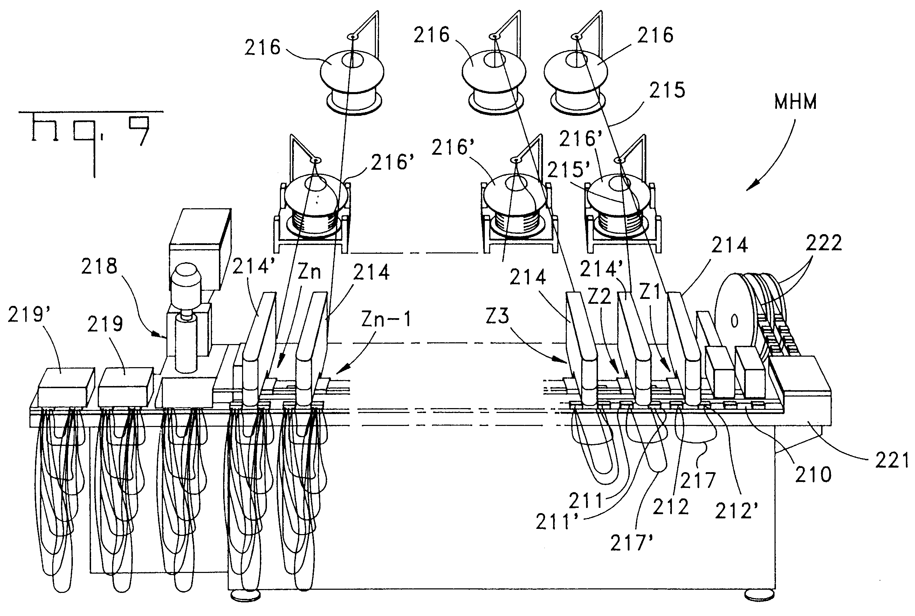

In order to provide the modular harness, which consists of harness modules, the connectors of which have terminals of the insulation displacement type, so that the individual modules can readily be produced by means of automated machinery, the next step is to derive from the diagram of Figure 2, a harness making program according to which a plurality of connectors, of the insulation displacement kind described below, by way of example, with reference to Figures 6 and 10, can be substituted for the single multi row main connector 2 of the conventional harness of Figure 1, whilst maintaining equivalent lead connections to satellite connectors also of the insulation displacement kind, to allow them to be correctly positioned in the vehicle. A series of harness modules 8, 20,30, and 44, according to an embodiment of the invention, which have been constructed according to the harness making program, will now be described with reference to Figures 3 to 5, in which program there are produced a plurality of main connector modules, a plurality of satellite connectors for selective allocation to each main connector module, and groups of leads for connecting the main connector modules to the satellite connectors.

As shown in Figure 3, the harness module 8 comprises a single row, eleven position, first main connector module 10 contact positions 1 and 2 of which are connected by 1.5 mm² leads to contact positions 1 and 3, of a three position satellite connector 14A for the servo motor. Contact positions 8 and 9 of the connector module 10 are connected by 0.5 mm² leads to contact positions 1 and 2, respectively, of a satellite connector 14B for the cam shaft position detector. Contact positions 10 and 11 of the connector module 10 are connected by 0.5 mm² leads to contact positions 1 and 2, respectively, of a three position satellite connector 14C for the water pump.

As shown in Figure 4, the harness module 20 comprises a single row eleven position second main connector module 22, contact positions 1 and 2 of which are connected by 0.75 mm² leads to contact positions 4 and 5, respectively, of a five position satellite connector 24A for the engine heat control. The contact position 3, of the connector module 22 is connected by a 1.5 mm² lead to contact position 1 of a two position satellite connector 24B for the plug connector. By way of a commoning satellite connector 24D, contact position 2 of the connector 24B being connected by a 1.5 mm² lead to contact position 2 of the connector 24A. Contact position 4 of the main connector module 22 is connected by a 0.5 mm² lead to contact position 6 of an eight position satellite connector 24C for the choke valves control. Contact positions 5 to 8 of the main connector module 22 are connected by 0.5 mm² leads to contact positions 1 to 4, respectively, of the connector 24C, contact positions 10 and 11 of the connector module 22 being connected by 0.5 mm² leads to contact positions 7 and 8 of the connector 24C and contact position 4 of the connector module 22 being connected by a 0.5 mm² lead to contact position 6 of the connector 24C. Contact position 4 of the connector 24A and contact position 5 of the connector 24C are connected to position 1 of the connector 24B by means of the commoning satellite connector 24D.

As shown in Figure 5, the harness module 30 comprises a single row, eleven position, third main connector module 32. Contact positions 1 to 3 of the connector module 32 are connected to contact position 2 of respective satellite connectors 34A, 34B, 34C for three injection valves of the group of such valves indicated in Figures 1 and 2 by way of 1.0 mm² leads. Contact position 4 of the connector module 32 is connected by a 1.0 mm² lead to contact position 1 of a satellite connector 34D for the remaining injection valve of said group. Contact positions 5 and 6 of the main connector module 32 are connected by 1.0 mm² leads to contact positions 1 of satellite connectors 34E and 34F for two additional injection valves, if needed. Contact positions 1 of the connectors 34A to 34C are connected by 1.0 mm² leads to contact positions 1 to 3 of a satellite branch connector 34H and contact positions 2 of the connectors 34D to 34F are connected by 1.0 mm² leads to contact positions 4 to 6 of the branch connector 34H. Positions 1 to 6 of the branch connector 34H are mated with a bus connector 35 having a ring tongue for connection to ground. The contact positions 10 and 11 of the main connector module 32 are connected by shielded leads to contact positions 2 and 1, respectively, of a satellite connector 34G for the anti-knocking sensor.

The harness module 44 comprises a single row, four position main connector module 46 position 1 of which is connected by a 0.75mm² lead to a one position satellite connector 48A for the thermostat. The contact position 2 of the main connector module 46 is connected by a 1.0mm² lead to contact position 2 of a satellite connector 48B for the cam shaft position indicator. Contact positions 3 and 4 of the main connector module 46 are connected by 0.75mm² leads to contact positions 1 and 2, respectively, of a satellite connector 48C for the heat control. Position one of the connector 48B is connected to position 7 of the main connector module 32 of the harness module 30 by a 1.5mm² jumper lead and jumper plug or socket connectors 54 and 55, respectively.

The main connector modules 10,22 and 32 of the harness modules 8,20 and 30 respectively, may be assembled together in a common housing (not shown) as a single modular unit, if the harness is to be assembled to the vehicle in the manner of the conventional harness shown in Figure 1. The harness module 44 is connected to the harness module 30 by means of the plug or socket connectors 54 and 55. Alternatively, the main connector modules of the harness modules may be disposed at different positions in the vehicle, the leads being of appropriate lengths. The unused contact positions of the main connector modules and the satellite connectors allow of subsequent modification of the harness to meet future requirements. In order to ensure that the connectors of each harness module can be loaded with leads by means of a harness making machine, each connector according to the present embodiment is of the type shown in Figure 6, although as shown in Figures 3 to 5, each connector will have either 11, 8, 5, 4,3,2 or 1 contact positions. The connector shown in Figure 6 is only exemplary of the type of connector to be used and is generally referenced 100. According to the present example the connector 100 comprises an insulating housing 102 defining one row of cavities 104, each cavity 104 which constitutes a contact position receiving an electrical terminal 106 (only one of which is shown). The cavities of those contact positions which are not to be used may, or may not be provided with a terminal. Each terminal 106 comprises a mating portion 108 which may be a receptacle as shown, or which may be, for example, a plug, as required. The mating portion 108 of each terminal 106 is formed integrally with an insulation displacement, lead connection portion 110 having a lead receiving slot 112 into which an insulated lead L can be forced so that the edges of the slot 112 make firm and permanent electrical contact with the metal core of the lead L.

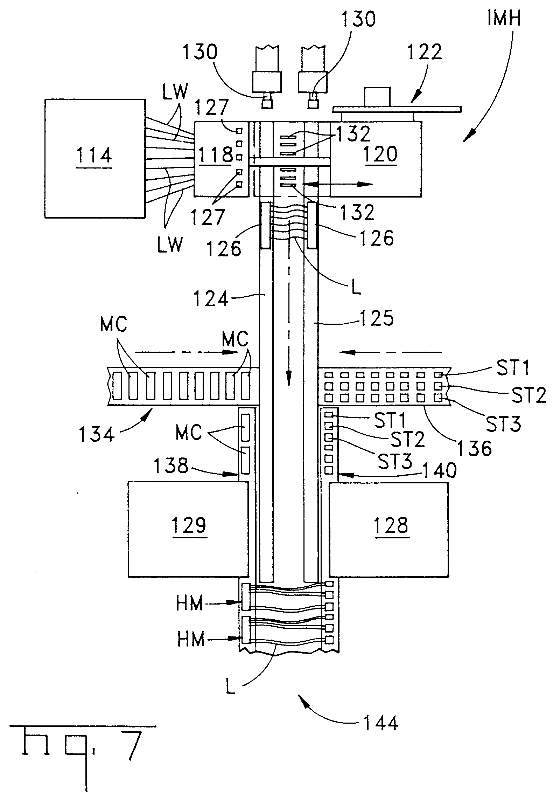

An example of a machine for making harness models as described above, will be now be described in outline with reference to Figures 7 and 8. The machine which is generally referenced IHM is constructed mainly according to the teaching of US-A-5,127,151 the disclosure of which is hereby incorporated herein by reference. The reader is referred to US-A-5,127,151 for a better understanding of the construction of the machine.

The machine IHM comprises a lead wire supply unit 114 containing a plurality of discrete storage reels of insulated lead wire LW of various gauges and types of insulation, for supply to a wire feed mechanism 118. A lead wire pulling device 120 is moveable from a first position proximate to the wire feed mechanism 118, as indicated in broken lines, to a second position, shown in full lines, aligned with a lead pitch setting mechanism 122, to pull the lead wires LW from the lead wire supply unit 114. In the second position of the pulling device 120, the pitch setting mechanism 118 sets the side by side spacing of the lead wires, after which wire lengthening devices 132 are driven down against the lead wires LW to pull a predetermined further length of each lead wire from the lead wire supply unit 114. The lead wires LW are then severed to produce a set of leads L for the particular harness module that is being manufactured, by means of blades 127 of the feed mechanism 118. A pair of spaced lead transfer track mechanisms 124 and 125, respectively, extend transversely of the direction of movement of the lead wire pulling device 120. A lead transport shuttle 126 on each mechanism 124 and 125 is arranged to grip and transport a complete set of leads L for each harness module of the particular production run in progress, to opposed lead insertion stations 128 and 129 respectively. To this end, the shuttles 126 are pushed along the track mechanisms 124 and 125 by means of pneumatically driven push rods 130. A main connector module feed mechanism 134 is arranged on the outside of the track mechanism 124, a satellite connector feed mechanism 126 being arranged on the outside of the track mechanism 125. The feed mechanism 134 intermittently feeds the main connector module MC for each harness module of the run, towards a main connector module transport mechanism 138 which intermittently feeds each connector module MC in turn which is presented thereto, to the lead insertion station 129. A satellite connector feed mechanism 136 intermittently feeds a row of columns of individual satellite connectors ST1 to ST3, in the present example, for each harness module of the run to a satellite connector transport mechanism 140 which intermittently feeds each column of connectors ST1 to ST3, in turn to the lead insertion station 128.

The shuttle 126 locates (as shown in broken lines in Figure 8) one end portion of a respective lead L of the set over the wire slot 110 of a respective terminal 106 of the main connector module MC at the lead insertion station 129 and the other end portion of the respective lead L over the lead receiving slot 110 of a respective terminal 106 of a respective satellite connector ST1 to ST3. The shuttles 126 then descend (as shown in full lines in Figure 8) and the inserters 142 at the insertion stations 28 and 29 each carry out a working stroke to force each lead end portion into its respective lead receiving slot 110. The lead inserters 142 then rise, the shuttles 126 open and return to their starting positions and the transport mechanisms 138 and 140 discharge the modular harness MH produced as described above at a discharge station 144. Instead of providing the lead wire lengthening devices 132, the lead wires LW could be positively driven from the supply unit 114 by the required length after the wire pulling device 120 has reached its second position.

In order to prepare it for each harness module making run, the machine IHM is programmed in accordance with the particular kind of harness module that it is to produce. The machine is therefore programmed to lengthen each lead wire LW to the extent required for the harness module and to adapt the pitch of the lead wires to the difference, if any, in pitch between the terminals of the main connector module and the terminals of the satellite connectors, of the harness module, to which terminal leads are to be connected. Also, connector feed and transport mechanisms which are capable of feeding main connector modules of the required dimensions and satellite connectors of the required dimensions and number to the lead insertion stations, must be assembled to the machine. Further, the lead inserters must be chosen so as to be capable of inserting leads of the required gauges in to their respective wire receiving slots, which may differ in dimensions.

Some connections, for example, individual connections between one satellite connector and another and connections to leads which are to be crossed over other leads, may be made at a further terminating station or terminating stations (not shown).

A lead bundling station may be provided downstream of the discharge station 144 for binding together the leads of each modular harness discharged.

The lead insertion stations may be provided with means for applying covers to the connectors where they are provided with covers hinged thereto or cover applying stations may be provided downstream of the discharge station.

Since the lead wires LW are measured and cut to length automatically in the harness module making machine IHM, the labour intensive process of cutting the lead wires to length and the use of electrical connectors having insulation displacement terminals avoids the need for crimping, soldering or screwing operations and the need for loading the terminals into their housings.

For convenience of production of the harness modules by means of a harness making machine, the satellite connectors especially, of each harness module to be produced, are preferable standardised, all being of similar cross sectional dimensions. Nevertheless, the mating portions of the terminals of the connectors may be of different kinds being, for example, male or female or being adapted to mate with conductors on the edge of a printed circuit board, the connector housings being appropriately adapted. Preferably the lead receiving slots 110 of the terminals of the connectors of each harness module, have sufficient tolerance to accept a lead of each of the gauges used in the harness module, so that each insertion station 128 and 129 can have assembled thereto a set of identical gauge inserters. Terminals having lead receiving slots which can accept leads of gauges from 0.5mm² to 1.0mm² are presently available.

Each different harness module may be produced by means of a respective harness module making machine set up for the production of that particular harness module.

Since the leads of each harness module have already been automatically cut to length and have been terminated to appropriate terminals of appropriate connectors, the time expended in laying the module harness on a board is greatly reduced (especially if the harness module making machine is provided with a lead binding station as described above), as compared with the time expended in laying out a conventional harness. It has been estimated that the total time to make a modular harness in the manner described above, would amount to about 2½ hours, whereas the time taken to make a conventional harness would amount to about 12½ hours.

As mentioned above, the mating portions of the terminals of the connectors of a harness module may be of any convenient form, and this also applies to the connector housings. Although each housing is preferably rectangular, being either a straight connector housing or a right angle connector housing, so that it can be fitted in a standardised connector feed or transport mechanism some of the housings may have one or more circular cross-section internal sockets for receiving a mating co-axial connector, the socket being common to both of said mating portions. In this case, the lead receiving portions of the two terminals would need to be arranged with their lead receiving slots in alignment, one slot being dimensioned to receive the shield of the shielded lead and the other to receive a central conductor thereof.

Another and preferred harness making machine which can be used in making a modular harness as described above, will now be described in outline with reference to Figure 9.

The machine, which is generally referenced MHM, is constructed according to the teaching of US-A-4 428 114 the disclosure of which is hereby incorporated by reference and to which the reader is referred for a better understanding of the machine. The machine MHM comprises a connector feed track 210 along which a series of pairs of connectors of 211 and 211', and 212 and 212' of the kind described above, and which may of various lengths, is fed from right to left (as seen in Figure 9). The connectors are supplied to the feed track 210 from storage reels 222 by way of a connector stripping mechanism 221 which strips the connectors from tapes by which they are carried. The connectors are fed intermittently along the track 210 in end-to-end relationship, through a series of lead insertion zones Z1 to Zn at each of which a respective one of a series of lead holding and lead insertion heads 214, 214' draws lead lengths 215, 215' respectively, from lead supplies 216, 216' respectively, and inserts one end of each lead length into the wire slot of a selected terminal of one connector of a pair and the other end of the lead length into the wire slot of a selected terminal of the other connector of the pair, during a dwell period of these connectors. At the insertion zone Z1, for example, the head 214 inserts the leading end of a lead 215 into the wire slot a selected terminal of a leading connector 212 of a connector pair 212, 212' at a first lead insertion station of the zone Z1. A lead feed roller assembly (not shown) associated with the head 214 then feeds a preselected length 217 of the lead length 215 from supply 216. and the head 214 is indexed rearwardly of the track 210 to a second insertion station of the zone Z1 and inserts the trailing end of the lead length 217 into the wire slot of a preselected terminal of the trailing connector 212' of the connector pair 212, 212' having severed the lead lengths 215 and 217 from the supply 216. All of the lead insertion heads 214, 214' are operated in the same way under a predetermined harness module making program so that at the zones Zn and Zn-1 the predetermined wiring of the connectors is completed. Downstream of the zone Zn is a sealing station 218 for injecting sealing material into the housings of the connectors if that is a requirement of the modular harness making program, an electrical continuity testing station 219, being provided downstream of the station 218. A connector severing station 219' is provided downstream of the station 219 for severing individual connectors into lengths according to the program. Thus selected terminals of a first long connector which is to be the main connector module of a modular harness to be produced may be connected to selected terminals of a second long connector, at the lead insertion zones, and the second long connector severed at the station 219' to provide the associated satellite connectors.

Figure 10 shows an insulation displacement type electrical connector 250 which has two superposed rows of electrical terminals each having a slotted lead connecting portion 252 and a mating portion (not shown) received in a respective cavity 254 in the housing 256 of the connector. Each cavity 254 opens into a mating face 258 of the housing 256. The lead connecting portions 252 are arranged in two superposed rows the terminal potions 252 of one row being arranged in back-to-back relationship with respect to those of the other row. In order to produce a harness module including such connectors, the module would have to be produced in two runs, the connectors 250 being fed in one orientation in one run and in the opposite orientation in the other run.

Some of the satellite connectors may be provided with leads terminating in crimped connections, for making branch connections for example, by means of a machine described in EP-A-0220237, the disclosure of which is hereby incorporated herein by reference, and which is a modified version of the machine of US-A-4 428114.

## Claims

1. A method of making a modular electrical harness, the method comprising the steps of;
(a) producing a rationalized circuit diagram of a conventional electrical harness comprising a single main electrical connector (2) having rows of electrical terminals connected to respective electrical terminals of a multiplicity of satellite electrical connectors;
(b) deriving from said diagram a modular harness making program;
(c) providing according to said program, a plurality of main electrical connector modules (10,22,32), and a multiplicity of satellite electrical connectors (14,24,34,48);
(d) allocating, according to said program, to each main connector module (10,22,32,46) a plurality of said satellite connectors;
(e) producing, according to said program, a plurality of sets of electrical leads, the leads (L) of each set being of a predetermined number and being of predetermined lengths and each set of leads (L) pertaining to a respective one of said main connector modules (10,22,32,46) and the satellite connectors (14,24,34,46) allocated thereto;
(f) producing a plurality of discreet harness modules (8,20,30,44) by terminating one end of each lead (L) into of a respective terminal (100) of the main connector module (10,22,32,46) to which the set of leads (L) pertains and terminating the other end portion of each lead (L) a terminal (100) of a respective satellite connector (14,24,34,46) to which said set of leads (L) pertains, thereby to connect each main connector module (10,22,32,44) with each of the satellite connectors which has been allocated thereto; and
(g) assembling the harness modules (8,20,30,44) so produced to provide said modular harness.

2. A method as claimed in claim 1, wherein step (g) comprises integrating the main connector modules (10,22,32) in a common housing to provide a single main connector having at least three superposed rows of terminals (106).

3. A method as claimed in any one of the preceding claims, wherein step (g) comprises the further step of releasably connecting a terminal (106) of the main connector module (32) of one (30) of the harness modules (8,20,30,44) to a terminal (106) of another (44) of the harness modules by means of a jumper lead having further terminals (54,55) for mating with the mating portions (108) of said terminals (106), the main connector module (46) of said other harness module (44) having a substantially smaller number of said further terminals (106) than the main connector (10,22,32,) of the remaining harness modules (8,20,30).

4. A method according to any one of the preceding claims, wherein the main connector modules (10,22,32,46) and the satellite connectors (14,24,34,48) provided in step (b) are connectors of substantially identical cross-sectional shape and cross -sectional dimensions, each satellite connector(14,24,34,48) having either a single row, or two rows, of terminals (106) or a single terminal (106), each main connector module being longer than any one of the satellite connectors pertaining thereto.

5. A method as claimed in any one of the preceding claims, wherein step (c) includes the step of providing a plurality of satellite branch connectors each having at least one electrical terminal having a mating portion (108) and a lead receiving portion (110) having a lead receiving slot (112) and step (f) includes the step of inserting end portions of further leads (L) into the lead receiving slots (112) of selected terminals (100) of selected satellite connectors and selected branch connectors.

6. A modular electrical harness when produced by the method claimed in claim 1, comprising a plurality of harness modules (8, 20, 30, 44) each harness module comprising an elongate main electrical connector module (10, 22, 32, 46) having no more than two rows of electrical terminals (106) each having a mating portion (108) and a lead receiving portion (110) having a lead receiving slot (112), each satellite connector having at least one electrical terminal having a mating portion (108) and a lead receiving portion (110) having a lead receiving slot (112), the lead receiving slot (112) of a terminal (106) of each satellite connector (14,24,34,48) receiving one end portion of an electrical lead (L), the other end portion of said lead (L) being received in the lead receiving slot (112) of a respective terminal (106) of the main connector module (10,22,32,46).

7. An electrical harness for interconnecting peripheral appliances to a further electrical connector including rows of electrical terminals, comprising satellite connectors (14A-C; 24A-D; 34A-G; 48A-D) having terminals therein for electrical connection to the respective peripheral applicances and leads (L) having a first end for electrical interconnection with one of the terminals of the further electrical connector and a second end for electrical connection to one of the terminals of one of the satellite connectors, characterized in that the electrical harness includes a plurality of harness modules (8,20,30,44) each module having a main connector module (10,22,32) having terminals therein that are electrically engaged to the first end of some of the leads, thereby being interconnected with a plurality of the satellite connectors, where said main connector module is interconnectable with the further connector so that the terminals of the main connector module engage a portion of the terminals of the further connector.

8. The electrical harness of claim 7, further characterized in that each harness module (8,20,30,44) is separate and distinct from the other harness modules.

9. The electrical harness of claim 7 or claim 8, further characterized in that main connector modules (10,22,32) are further assembable in a common housing as a single modular unit.

10. A machine (IMM) for making electrical harness modules (HM) for a harness as claimed in claim 6 or 7, the machine comprising ;
a wire lead supply mains (114) having a plurality of discrete sources of insulated electrical lead wires (LW) of a plurality of different gauges.
a lead set producing apparatus (118,120,127,132) for feeding from said sources a set of lead wires (LW) to a plurality of different lengths and for severing each lead wire (LW) from its source to provide a set of leads (L) having a plurality of different lengths
a main connector module feed mechanism (138) for feeding a single main connector module (MC) at a time to a main connector module lead insertion station (129) for inserting one end portion of each lead into the lead receiving slot (112) of a respective terminal (100) of said single main connector module (MC);
a satellite connector feed mechanism (140) for feeding a row of satellite connectors (ST1,ST2,ST3) at a time to a satellite connector lead insertion station (128) for inserting the other end portion of each lead (L) into the lead receiving slot (112) of a terminal of a respective satellite connector (ST1,ST2,ST3) of said row; and a lead transfer mechanism (126,130) for transporting each set of leads (L) from the lead set producing apparatus (118,120,127,132), to present said lead end portions to said lead insertion stations (128,129) for insertion into said lead receiving slots (112) to produce a harness module (HM).
